# EUROPÄISCHE PATENTSCHRIFT

(11) **EP 2 218 640 B1**
(45) Veröffentlichungstag und Bekanntmachung des Hinweises auf die Patenterteilung: **31.07.2019**
(21) Anmeldenummer: 10001070.1
(22) Anmeldetag: 03.02.2010
(51) Int. Cl.: B64C 1/12, B64C 3/26, B64C 1/06, B64C 3/18

(54) **Strukturbauteil**
Structural component
Composant de structure

(30) Priorität: 05.02.2009 DE 102009007730
(43) Veröffentlichungstag der Anmeldung: 18.08.2010
(73) Patentinhaber: MBDA Deutschland GmbH, 86529 Schrobenhausen (DE)
(72) Erfinder: Gruss, Holger Prof., 01257 Dresden (DE)
(74) Vertreter: Isarpatent

(56) Entgegenhaltungen:
- WO-A1-2005/007910
- DE-B3-102004 035 170
- DE-B4-102006 040 298
- US-A1- 2006 226 287

## Beschreibung

### TECHNISCHES GEBIET

Die vorliegende Erfindung betrifft ein Strukturbauteil bestehend aus zumindest einem Hautelement und zumindest einem mit dem Hautelement verbundenen Versteifungselement nach dem Oberbegriff des Patentanspruchs 1. Derartige Strukturbauteile werden üblicherweise in der Luft- und Raumfahrttechnik, aber auch im Schiffbau, eingesetzt und verbinden den Vorteil des geringen Gewichts mit dem Vorteil einer hohen Steifigkeit.

### STAND DER TECHNIK

Ein Großteil der Strukturen von Luft- und Raumfahrzeugen, wie beispielsweise Rumpf und Tragflächen, wird aus metallischen Werkstoffen hergestellt. Um die geforderte Steifigkeit und Festigkeit der Strukturen bei gleichzeitig niedrigem Gewicht zu erfüllen, werden Hautelemente, beispielsweise Hautbleche, mit Versteifungselementen versehen. Beispielsweise wird die Außenhaut des Flugzeugrumpfes in Längsrichtung durch erste Versteifungselemente (Stringer) und in Umfangsrichtung durch zweite Versteifungselemente (Spanten) verstärkt.

Es sind unterschiedliche Verfahren bekannt, die Versteifungselemente mit dem Hautelement zu verbinden. Erfolgt die Verbindung zwischen Versteifungselementen und Hautelement durch Nieten oder Kleben mittels eines separaten Klebstoffs, so spricht man von einer differentiellen Bauweise. Erfolgt die Verbindung zwischen Versteifungselementen und Hautblech beispielsweise durch Schweißen oder durch gleichzeitiges Extrudieren von Hautelement und Versteifungselementen, so spricht man von einer integralen Bauweise. Auch die Umformtechniken des Gießens, Schmiedens, Fräsens, Sinterns oder andere bekannte Umformverfahren zur integralen Herstellung von Hautblech und Versteifungselementen werden unter dem Begriff "Integrale Bauweise" zusammengefasst. Bei diesen letzteren Bauweisen wird die Einheit von Hautblech und Versteifungselementen als Monolith, also einstückig, hergestellt.

Ein wesentliches Kriterium bei der Auslegung gattungsgemäßer Strukturbauteile in Luft- und Raumfahrzeugen sind deren Rissfortschrittsverhalten und Restfestigkeitsverhalten. In der Luftfahrttechnik werden Strukturbauteile, beispielsweise von Flugzeugen, regelmäßig nach vorgeschriebenen Wartungsintervallen inspiziert und auf Risse untersucht. Durch die hohen Belastungen, die ein Luftfahrzeug aufgrund von Vibrationen, von Druckunterschieden zwischen dem Luftfahrzeuginnenraum und der Umgebung und von mechanischen und thermischen Wechselbelastungen während des Fluges ausgesetzt ist, können Risse besonders im Hautelement entstehen. Entscheidend ist jedoch, dass diese Risse nur langsam fortschreiten und nicht plötzlich zum Versagen der Festigkeit und Tragfähigkeit des Strukturbauteils führen. Zur Zulassung eines Luftfahrzeugs muss daher nachgewiesen werden, dass durch Risse innerhalb eines Inspektionsintervalls keine zum Versagen führenden Schädigungen auftreten.

Bezüglich des Fortschreitens von Rissen unterscheidet sich die differentielle Bauweise deutlich von der integralen Bauweise.

Tritt in einem integralen Bauteil, beispielsweise bei einer geschweißten Verbindung zwischen Hautelement und den Versteifungselement ein Riss im Hautelement auf und wandert dieser Riss in den Bereich, an dem das Versteifungselement mit dem Hautelement verbunden, beispielsweise verschweißt, ist, so teilt sich der Riss im Fußbereich des Versteifungselements in einen Hautriss und einen Versteifungsriss auf. Beide Risse breiten sich gleichzeitig in beiden Teilkomponenten aus, ohne dass eine merkliche Rissverzögerung auftritt. Die Rissausbreitung im Hautblech wird somit bei einer integralen Bauweise nicht wirksam behindert oder gar gestoppt. Diesem Nachteil der integralen Bauweise steht allerdings der Vorteil einer sehr hohen Steifigkeit gegenüber.

Bei der differentiellen Bauweise, beispielsweise bei mit dem Hautelement vernieteten oder verklebten Versteifungselementen, wirken die Versteifungselemente als Rissstopper beziehungsweise Rissverzögerer. Der Rissfortschritt im Hauptblech wird gestoppt beziehungsweise verzögert, da sich die Rissspitze für eine bestimmte Anzahl von Lastwechseln nicht in die Versteifungselemente ausbreitet. Zudem wird die Struktur durch weiterhin intakte Versteifungselemente zusammengehalten. Die Restfestigkeit des angerissenen Bauteils bleibt somit auf einem hohen Niveau, weil das unbeschädigte Versteifungselement weiterhin einen erheblichen Teil der statischen Gesamtlast übernimmt.

Der Einsatz von Strukturbauteilen der integralen Bauweise ist folglich nur für Rumpfbereiche möglich, für die nicht die Auslegungskriterien für Schadenstoleranz erfüllt werden müssen. Dies sind im Allgemeinen nur die Unterschalen des Rumpfes eines Luftfahrzeugs.

Ein Beispiel für laserstrahlgeschweißte Strukturbauteile ist aus der DE 196 39 667 C1 bekannt.

Weiterhin ist es bekannt, durch spezielle Strukturformen metallische Schalenbauteile mit verbessertem Rissfortschritts- und Restfestigkeitsverhalten zu schaffen. In der DE 199 24 909 C1 ist zum Beispiel die Aufbiegung eines Versteifungselements in dessen Fußbereich beschrieben.

Die DE 103 31 990 A1 offenbart zur effektiven Behinderung der Rissausbreitung, eine schmale metallisch induzierte Feinkornzone in ein Strukturbauteil aus Aluminium einzubringen. Auf diese Weise wird eine gezielte Rissablenkung entlang der Verbindungslinie von Hautblech und Versteifungselement hervorgerufen. Um das Fortschreiten von Nebenrissen entlang der Verbindungslinie zu reduzieren beziehungsweise zu stoppen, können in dem Versteifungselement zusätzliche nebeneinander positionierte Bohrungen vorgesehen werden.

In der EP 1 323 638 A1 wird zur Verbesserung des Rissfortschrittsverhaltens integraler Strukturen die Verwendung einer separaten Komponente vorgeschlagen, die in das Versteifungsprofil zur Bildung einer internen Grenzfläche eingebracht ist.

Die EP 1 291 279 A2 und die EP 1 166 950 A2 lehren, dass im Kontext der Differentialbauweise durch gezieltes Anbringen eines separaten Bauteils das Schadentoleranzverhalten, insbesondere hinsichtlich Rissfortschritt und Restfestigkeit verbessert werden kann.

Aus der DE 103 01 445 B1 ist ein Leichtbau-Strukturbauteil, insbesondere für Flugzeuge, bekannt, welches aus mindestens einem Hautblech und darauf längs und/oder quer angeordneten Versteifungselementen besteht. Der dem Hautblech zugewandte untere Stegbereich besteht dabei aus zwei Schenkeln, die beide mittels getrennter Fügezonen stoffschlüssig mit dem Hautblech verbunden sind. Hieraus ergibt sich ein differentielles Versagensverhalten.

Ein ähnliches differentielles Versagensverhalten wird durch eine besondere Ausbildung des Versteifungselements, wie sie in der DE 10 2006 040 298 B4 offenbart ist, hervorgerufen.

Gemäß der Lehre der DE 10 2006 020 053 B4 werden neben dem Versteifungselement Aussparungen als definierte Dickensprünge in das Hautblech eingebracht, um die Richtung der Rissausbreitung auf einem vorgegebenen Pfad zu erzwingen.

Als "Dicke" wird die Ausdehnung des Hautelements senkrecht zur Hautelementebene verstanden.

Die US 2006/226287 A1 zeigt und beschreibt ein Strukturbauteil, bei welchem ein Hautelement mit einer Mehrzahl von parallel zueinander verlaufenden und in Umfangsrichtung voneinander beabstandeten Stringern versehen ist, auf denen wiederum in Längsrichtung voneinander beabstandete Spanten angeordnet sind.

Sowohl die Stringer als auch die Spanten sind vom Hautelement unabhängige eigenständige Elemente, die mit dem Hautelement verbunden sind. In Umfangsrichtung zwischen den Stringern sind unter den Spanten Verdickungen des Hautelements vorgesehen, die den Abstand zwischen zwei benachbarten Stringern lückenlos überbrücken, um zusammen mit entsprechenden Bodenabschnitten der Stringer ein Auflager für die Spanten zu bilden. Die Spanten sind auf die Bodenabschnitte der Stringer und auf die Verdickungen des Hautelements aufgenietet.

Die DE 10 2006 040 298 B4 zeigt ein Leichtbau-Strukturbauteil, bei welchem Verstärkungselemente im Wesentlichen parallel zueinander und voneinander beabstandet mit einem Hautelement verbunden sind. Die Verstärkungselemente sind mit Fußbereichen, die sich über die gesamte Länge der Verstärkungselemente erstrecken, mit verdickten Abschnitten des Hautelements, die sich ebenfalls über die gesamte Länge des Verstärkungselements erstrecken, formschlüssig aber nicht integral verbunden.

Die DE 10 2004 035 170 B3 beschreibt ein Verfahren zur Fertigung eines zylindrisch gekrümmten Blechteils, bei welchem Spanten und/oder Stringer in Sockelbereichen des Blechteils aufgebracht werden.

### DARSTELLUNG DER ERFINDUNG

Aufgabe der vorliegenden Erfindung ist es, ein gattungsgemäßes Strukturbauteil zu schaffen, das die Vorteile der höheren Steifigkeit einer Integralbauweise mit den Vorteilen des differentiellen Versagensverhaltens einer Differentialbauweise verbindet. Diese Aufgabe wird durch das im Patentanspruch 1 angegebene Strukturbauteil gelöst.

Ein erfindungsgemäßes Strukturbauteil besteht aus zumindest einem Hautelement und zumindest einem mit dem Hautelement verbundenen Versteifungselement. Das Hautelement ist im Bereich der Verbindung mit dem Versteifungselement mit einer Mehrzahl von in Richtung des Versteifungselements voneinander beabstandeten Aufdickungen versehen, wobei die Aufdickungen Bestandteile des Hautelements sind. Erfindungsgemäß ist das Versteifungselement im Bereich der Aufdickungen mit dem Hautelement verbunden, wodurch eine Mehrzahl von Verbindungsabschnitten gebildet werden, die in Erstreckungsrichtung des Versteifungselements voneinander beabstandet sind. In den Bereichen mit geringerer Hautstärke zwischen einander benachbarten Aufdickungen sind keine Schweißnähte vorgesehen. Darüber hinaus, ist das Versteifungselement mit der Mehrzahl von Aufdickungen verschweißt, und die Aufdickungen weisen jeweils eine Rhombus-Form auf, wobei das Versteifungselement entlang einer Verbindungslinie von zwei einander gegenüber gelegenen Ecken des Rhombus ausgerichtet ist.

### VORTEILE

Wandert nun ein Hautriss in Richtung der Verbindung zwischen dem Hautelement und einem Versteifungselement, so trifft die Rissspitze auf die Aufdickung des Hautelements, von der der Riss zunächst gestoppt wird, da er nicht mit der gleichen Rissfortschrittgeschwindigkeit in diesen dickeren Teil des Hautelements im Bereich der Aufdickung wandern kann. Der Riss sucht sich vielmehr einen Weg um die Aufdickung herum und wandert zwischen zwei benachbarten Aufdickungen hindurch. Da an dieser Stelle des Hautelements das Versteifungselement nicht mit dem Hautelement verbunden ist, kann der Riss auch nicht in das Versteifungselement eintreten; er wandert, ohne das Versteifungselement zu beschädigen, unter diesem hindurch.

Erfindungsgemäß ist die Verbindung zwischen dem Versteifungselement und dem Hautelement eine Schweißverbindung. Dadurch wird eine hohe Strukturfestigkeit erzielt.

Alternativ und nicht erfindungsgemäß kann die Verbindung zwischen dem Versteifungselement und dem Hautelement auch eine monolithische Verbindung sein. Unter monolithischer Verbindung ist hier eine einstückige Verbindung zu verstehen, die beispielsweise durch Gießen, Schmieden, Fräsen, Sintern oder andere Umformverfahren gebildet wird. Eine andere monolithische Verbindung zwischen Versteifungselement und Hautelement wird dann erhalten, wenn sowohl das Versteifungselement, als auch das Hautelement aus einem Kunstharz aufweisenden Werkstoff bestehen und diese beiden Teile mit demselben Kunstharz verklebt und anschließend in einem Autoklaven verbacken werden.

Erfindungsgemäß ist vorgesehen, dass die Aufdickungen jeweils eine Rhombusform aufweisen, wobei das Versteifungselement entlang einer Verbindungslinie von zwei einander gegenüber gelegenen Ecken des Rhombus' ausgerichtet ist. Durch diese Ausgestaltung der Aufdickungen werden Hautrisse, die in Richtung eines Versteifungselements wandern, in einem stumpfen Winkel um den Aufdickungsbereich herum geleitet, wodurch die Gefahr des Entstehens von Nebenrissen im Bereich der Rissumlenkung reduziert ist.

Vorzugsweise sind dabei die Ecken des Rhombus' abgerundet. Dies trägt ebenfalls zur Reduzierung der Gefahr des Entstehens von Nebenrissen bei.

In einer bevorzugten Ausführungsform ist das Versteifungselement im Bereich des Abstandes zwischen zwei einander benachbarten Aufdickungen mit einer Ausnehmung versehen. Hierdurch kann das Gewicht des Versteifungselements und damit der gesamten Struktur reduziert werden.

Besonders bevorzugt ist eine Ausführungsform, bei der das Verhältnis der Länge des Verbindungsabschnitts zum Abstand zwischen zwei einander benachbarten Verbindungsabschnitten mindestens 3:1 beträgt. Auf diese Weise wird die Verbindung zwischen dem Versteifungselement und dem Hautelement nur jeweils auf einer geringfügigen Strecke unterbrochen, die jedoch ausreichend ist, um an dieser Stelle Risse unter dem Versteifungselement hindurchführen zu können.

Das Strukturbauteil weist vorzugsweise eine Mehrzahl von seitlich voneinander beabstandeten Versteifungselementen auf.

Besonders bevorzugt ist ein erfindungsgemäßes Strukturbauteil, bei dem eine Mehrzahl von ersten Versteifungselementen in einer ersten Richtung angeordnet und eine Mehrzahl von zweiten Versteifungselementen in einer zweiten Richtung angeordnet sind, wobei die erste Richtung und die zweite Richtung in einem Winkel zueinander ausgerichtet sind und wobei der Winkel vorzugsweise 90° beträgt. Bei dieser Bauweise sind die ersten Versteifungselemente beispielsweise von in Rumpflängsrichtung angeordneten Stringern gebildet und die zweiten Versteifungselemente sind von in Umfangrichtung des Rumpfes angeordneten Spanten gebildet.

Vorzugsweise bestehen das Hautelement und das Versteifungselement beziehungsweise die Versteifungselemente aus Metall, insbesondere aus Leichtmetall. Es ist jedoch auch möglich, Hautelement und/oder Versteifungselemente aus Verbundwerkstoffen oder faserverstärkten Kunststoffen zu bilden.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine perspektivische Ausschnittansicht eines erfindungsgemäßen Strukturbauteils;
- Fig. 2: eine Seitenansicht des Strukturbauteils aus Fig. 1;
- Fig. 3: eine Draufsicht auf das Strukturbauteil der Fig. 1;
- Fig. 4: ein Strukturbauteil gemäß Fig. 1 mit ersten und zweiten Versteifungselementen;
- Fig. 5: eine Seitenansicht einer alternativen Ausführungsform des erfindungsgemäßen Strukturbauteils; und
- Fig. 6: eine Seitenansicht einer weiteren alternativen Ausführungsform eines erfindungsgemäßen Strukturbauteils.

### DARSTELLUNG VON BEVORZUGTEN AUSFÜHRUNGSBEISPIELEN

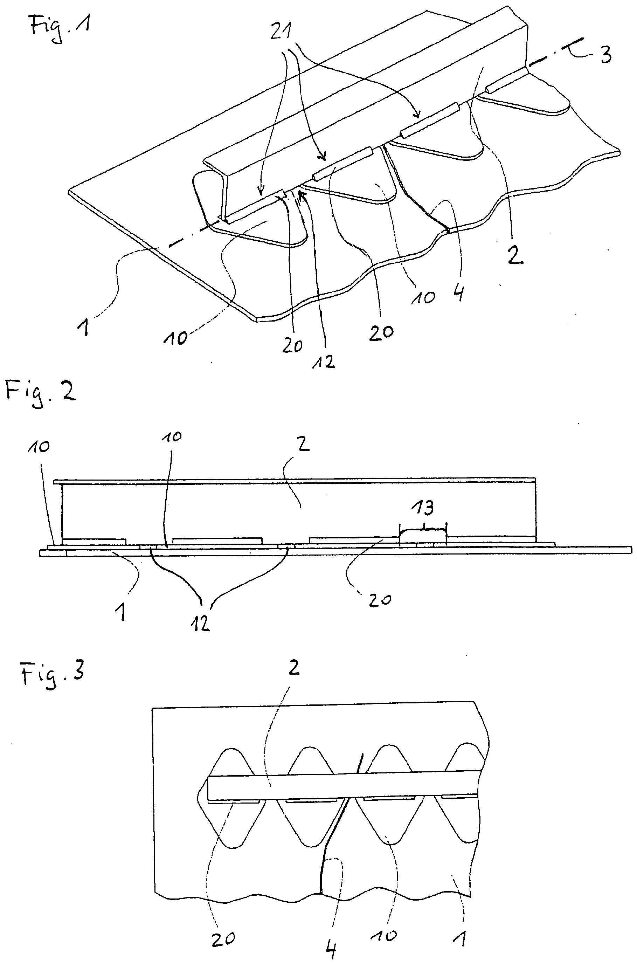

Fig. 1 zeigt in perspektivischer Ansicht ein erfindungsgemäßes Strukturbauteil mit einem flächigen Hautelement 1 und einem zur Versteifung mit dem Hautelement 1 verbunden Versteifungselement 2.

Das Hautelement 1 ist mit rhombusförmigen Aufdickungen 10 versehen, die an ihren Ecken abgerundet ausgebildet sind. Die Aufdickungen 10 bezeichnen eine Dicken-Ausdehnung des als Hautblech ausgeführten Hautelements 1 senkrecht zur Hautelement-Ebene. Die Aufdickungen 10 sind Bestandteile des Hautelements 1. Typischerweise werden die Aufdickungen 10 durch Fräsen, insbesondere chemisches Fräsen, des zur Herstellung des Hautelements verwendeten Halbzeugblechs herausgearbeitet.

Die im Beispiel gezeigten rhombusförmigen Aufdickungen 10 sind mit geringfügigem Abstand voneinander beabstandet in einer Linie angeordnet, die parallel zur Verbindungslinie 3 des Versteifungselements 2 mit dem Hautelement 1 verläuft. Dabei sind die rhombusförmigen Aufdickungen 10 so ausgerichtet, dass die Verbindungslinie 3 die zwei einander gegenübergelegenen stumpfwinkeligen Ecken eines jeden Rhombus miteinander verbindet.

Die vorliegende Erfindung ist nicht auf rhombusförmige Aufdickungen beschränkt. Die Aufdickungen können auch jede andere geometrische Form aufweisen, beispielsweise auch oval ausgebildet sein, wobei dann die Verbindungslinie parallel zur kurzen Symmetrieachse des Ovals verläuft.

Das im Beispiel als Winkelprofil ausgebildete Versteifungselement 2 ist mit dem Hautelement 1 durch Schweißnähte 20 verschweißt. Die Schweißnähte 20 sind ausschließlich im Bereich der Aufdickungen 10 des Hautelements 1 vorgesehen und bestimmen einen Verbindungsabschnitt 21. In den Bereichen 12 mit geringerer Dicke des Hautelements 1 zwischen einander benachbarten Aufdickungen 10 sind keine Schweißnähte vorgesehen. Demzufolge bilden die Schweißnähte 20 Steppnähte, mittels derer das Versteifungselement 2 partiell mit dem Hautelement 1 verbunden ist.

Im gezeigten Beispiel ist lediglich ein Versteifungselement 2 beispielhaft dargestellt. Es versteht sich für den Fachmann von selbst, dass eine Mehrzahl von Versteifungselementen 2 auf die in Fig. 1 gezeigte Weise mit dem Hautelement 1 verbunden sein kann. Dazu können die Versteifungselemente 2 beispielsweise parallel zueinander angeordnet sein. Außerdem können neben ersten Versteifungselementen 2 auch in einem Winkel dazu verlaufende zweite Versteifungselemente 5 mit dem Hautelement 1 verbunden sein. Dem Fachmann ist es bekannt, Strukturelemente zu bilden, in denen erste Versteifungselemente 2 (Stringer) und rechtwinklig dazu verlaufende zweite Versteifungselement (Spanten) 5 vorgesehen sind.

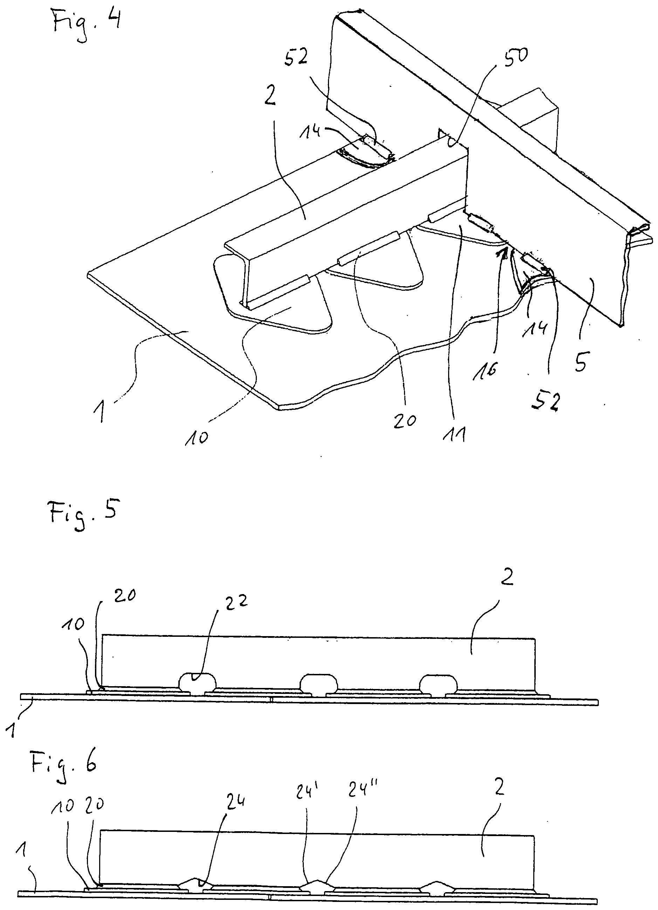

In Fig. 4 ist eine derartige Ausführungsform mit ersten und zweiten Versteifungselementen 2, 5 dargestellt. Das erste Versteifungselement 2 entspricht im Aufbau und in der Anbringung am Hautelement 1 dem Beispiel aus Fig. 1. Das zweite Versteifungselement 5 überbrückt das erste Versteifungselement 2, wozu das zweite Versteifungselement 5 eine Ausnehmung 50 aufweist. In Längsrichtung des zweiten Versteifungselements 5 sind ebenfalls rhombusförmige Aufdickungen 14 des Hautelements 1 vorgesehen, die voneinander beabstandet sind und zwischen sich einen Bereich 16 von geringerer Dicke des Hautelements 1 bestimmen. Das zweite Versteifungselement 5 ist mittels Schweißnähten 52 auf den diesem Versteifungselement zugeordneten Aufdickungen 14 mit dem Hautelement 1 verbunden. Eine weitere Schweißverbindung zwischen dem zweiten Versteifungselement 5 und dem Hautelement 1 ist auf der Aufdickung 11 vorgesehen, auf der sowohl das erste Versteifungselement 2, als auch das zweite Versteifungselement 5 abgestützt sind.

Wenn das in Fig. 1 dargestellte Versteifungselement 2 einen Stringer bildet, der in erfindungsgemäßer Weise mit dem Hautelement 1 verbunden ist, so erstreckt sich die vorliegende Erfindung somit auch darauf, Spanten, die von in einem Winkel zum ersten Versteifungselement 2 verlaufenden zweiten Versteifungselementen 5 gebildet sind, auf dieselbe Weise, wie in der Fig. 1 gezeigt, mit dem Hautelement 1 zu verbinden.

Um eine hohe Struktursteifigkeit und Kopfzugfestigkeit des erfindungsgemäßen Strukturbauteils zu gewährleisten, dürfen die Abstände 13 zwischen den einzelnen Schweißnähten 20, 52 nur einige Millimeter betragen.

Nachstehend wird unter Bezugnahme auf die Fig. 1 und 3 das Verhalten des erfindungsgemäßen Strukturbauteils bei Auftreten eines im Hautelement fortschreitenden Risses beschrieben.

Trifft ein im Hautelement 1 fortschreitender Riss 4 auf eine Aufdickung 10, so ist der Riss 4 gezwungen, einen durch den Dickensprung vorgegebenen Weg einzunehmen. Folglich wird der Riss 4 aus seiner ursprünglichen Richtung entlang dem Rand der Aufdickung 10 abgelenkt und läuft in dem Bereich 12 mit geringerer Dicke des Hautelements 1 zwischen zwei einander benachbarten Aufdickungen 10 unterhalb des Versteifungselements 2 im Hautblech hindurch. Das Versteifungselement 2 gerät somit nicht in Kontakt mit der Rissspitze und bleibt somit über einen längeren Zeitraum intakt, da sich die Rissspitze für eine bestimmte Anzahl von Lastwechseln nicht in das Versteifungselement ausbreitet. Folglich nimmt die Rissfortschrittsgeschwindigkeit ab und die Restfestigkeit nimmt zu. Das Versteifungselement 2 wirkt demnach als Rissverzögerer. Das erfindungsgemäße integrale Strukturbauteil besitzt somit ein differentielles Versagensverhalten.

Auch Längsrisse, die beispielsweise im Bereich einer Schweißnaht 20 entstehen, werden durch Unterbrechungen zwischen zwei benachbarten Schweißnähten 20 und die Unterbrechungen zwischen zwei benachbarten Aufdickungen 10 durch den Bereich 12 mit geringerer Dicke des Hautelements 1 in ihrer Ausbreitung gestoppt oder zumindest gebremst und gegebenenfalls zwischen zwei benachbarten Aufdickungen 14 unter dem zweiten Versteifungselement 5 hindurch geleitet. Somit ist die vorliegende Erfindung dazu geeignet, sowohl die Umfangsrissproblematik, als auch die Längsrissproblematik bei integralen Strukturbauteilen zu beherrschen.

Bei der in Fig. 5 dargestellten alternativen Ausführungsform des erfindungsgemäßen Strukturbauteils ist das Versteifungselement 2 in den Bereichen zwischen einander benachbarten Schweißnähten 20 mit nach unten, zum Hautelement 1 hin, offenen Ausnehmungen 22 versehen. Die Ausnehmungen 22 besitzen eine ovale Gestalt.

Eine weitere alternative Ausgestaltung des Versteifungselements 2 mit anderen Ausnehmungen 24 ist in Fig. 6 dargestellt. Diese Ausnehmungen 24 sind ebenfalls zum Hautelement 1 hin offen und weisen zwei unter einem stumpfen Winkel aufeinander auftreffende Basiskanten 24', 24" auf.

Der Stegquerschnitt des Versteifungselements 2 kann somit über die gesamte Bautteillänge konstant sein oder er kann mit Ausnehmungen versehen sein.

Auch wenn das in den Figuren gezeigte und in Verbindung mit den Zeichnungen beschriebene Strukturbauteil ein metallisches Bauteil mit geschweißter Verbindung zwischen dem Versteifungselement 2 und dem Hautelement 1 ist, so ist die vorliegende Erfindung grundsätzlich auch auf andere integrale Fügeverfahren übertragbar. Insbesondere kann das erfindungsgemäße Strukturbauteil auch aus Kunststoffen, beispielsweise kohlefaserverstärktem Kunststoff (CFK) bestehen, wobei das aus Kunststoff bestehende Versteifungselement 2 und das aus Kunststoff bestehende Hautelement 1 miteinander verklebt und anschließend verbacken werden. Anstelle der oben beschriebenen Schweißnähte 20 treten dann entsprechende Klebenähte.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Hautelement
- 2: erstes Versteifungselement
- 3: Verbindungslinie
- 4: Riss
- 5.: zweites Versteifungselement
- 10: Aufdickung
- 11: Aufdickung
- 12: Bereich mit geringerer Dicke
- 13: Abstand zwischen Schweißnähten
- 14: Aufdickung
- 16: Bereich mit geringer Dicke
- 20: Schweißnaht
- 22: Ausnehmung
- 24: Ausnehmung
- 24': Basiskante
- 24": Basiskante
- 50: Ausnehmung
- 52: Schweißnaht

## Patentansprüche

1. Strukturbauteil, bestehend aus
- zumindest einem Hautelement (1) und
- zumindest einem mit dem Hautelement (1) verbundenen Versteifungselement (2),
- sowie einer Mehrzahl von Aufdickungen (10),
wobei
- das Hautelement (1) im Bereich der Verbindung mit dem Versteifungselement (2) mit einer Mehrzahl von in Richtung des Versteifungselements (2) voneinander beabstandeten Aufdickungen (10) versehen ist, die Bestandteile des Hautelements (1) sind,
- in den Bereichen (12) mit geringerer Dicke des Hautelements (1) zwischen einander benachbarten Aufdickungen (10) keine Schweißnähte vorgesehen sind, und
- das Versteifungselement (2) im Bereich der Aufdickungen (10) integral mit dem Hautelement (1) verbunden ist und so eine Mehrzahl von voneinander beabstandeten Verbindungsabschnitten (21) bildet
**dadurch gekennzeichnet, dass**
- das Versteifungselement (2) mit der Mehrzahl von Aufdickungen (10) verschweißt ist, und
- die Aufdickungen (10) jeweils eine Rhombus-Form aufweisen, wobei das Versteifungselement (2) entlang einer Verbindungslinie von zwei einander gegenüber gelegenen Ecken des Rhombus' ausgerichtet ist.

2. Strukturbauteil nach Anspruch 1, **dadurch gekennzeichnet, dass** die Ecken des Rhombus' abgerundet sind.

3. Strukturbauteil nach einem der vorhergehenden Ansprüche, **dadurch gekennzeichnet, dass** das Versteifungselement (2) im Bereich des Abstandes zwischen zwei einander benachbarten Aufdickungen (10) mit einer Ausnehmung (22; 24) versehen ist.

4. Strukturbauteil nach einem der vorhergehenden Ansprüche, **dadurch gekennzeichnet, dass** das Verhältnis der Länge des Verbindungsabschnitts (21) zum Abstand zwischen zwei einander benachbarten Verbindungsabschnitten (21) mindestens 3:1 ist.

5. Strukturbauteil nach einem der vorhergehenden Ansprüche, **dadurch gekennzeichnet, dass** eine Mehrzahl von seitlich voneinander beabstandeten Versteifungselementen (2) vorgesehen ist.

6. Strukturbauteil nach einem der vorhergehenden Ansprüche, **dadurch gekennzeichnet, dass** eine Mehrzahl von ersten Versteifungselementen (2) entlang einer ersten Richtung angeordnet und eine Mehrzahl von zweiten Versteifungselementen (5) entlang einer zweiten Richtung angeordnet sind, wobei die erste Richtung und die zweite Richtung in einem Winkel zueinander ausgerichtet sind, wobei der Winkel vorzugsweise 90° beträgt.

7. Strukturbauteil nach einem der vorhergehenden Ansprüche, **dadurch gekennzeichnet, dass** das Hautelement (1) und das Versteifungselement (2) beziehungsweise die Versteifungselemente (2; 5) aus Metall, vorzugsweise aus Leichtmetall, bestehen.

## Claims

1. Structural component, consisting of
- at least one skin element (1) and
- at least one stiffening element (2) connected to the skin element (1),
- and a plurality of thickened regions (10),
wherein
- the skin element (1) in the region of the connection to the stiffening element (2) is provided with a plurality of mutually remote thickened regions (10) in the direction of the stiffening element (2) which are components of the skin element (1),
- in the regions (12) of the skin element (1) which are less thick, no welds are provided between mutually adjacent thickened regions (10), and
- the stiffening element (2) is integrally connected to the skin element (1) in the region of the thickened regions (10) and so forms a plurality of mutually remote connecting portions (21),
**characterised in that**
- the stiffening element (2) is welded to the plurality of thickened regions (10), and
- the thickened regions (10) each have the shape of a rhombus, the stiffening element (2) being aligned along a line connecting two mutually opposing corners of the rhombus.

2. Structural component according to claim 1, **characterised in that** the corners of the rhombus are rounded.

3. Structural component according to any one of the preceding claims, **characterised in that** the stiffening element (2) in the region of the distance between two mutually adjacent thickened regions (10) is provided with a recess (22; 24).

4. Structural component according to any one of the preceding claims, **characterised in that** the ratio of the length of the connecting portion (21) to the distance between two mutually adjacent connecting portions (21) is at least 3:1.

5. Structural component according to any one of the preceding claims, **characterised in that** a plurality of mutually laterally remote stiffening elements (2) is provided.

6. Structural component according to any one of the preceding claims, **characterised in that** a plurality of first stiffening elements (2) is aligned in a first direction and a plurality of second stiffening elements (5) is aligned in a second direction, the first direction and the second direction being oriented at an angle to one another, which is preferably 90°.

7. Structural component according to any one of the preceding claims, **characterised in that** the skin element (1) and the stiffening element (2) or stiffening elements (2; 5) consist of metal, preferably light metal.

## Revendications

1. Composant de structure, constitué de
- au moins un élément de revêtement (1) et
- au moins un élément de renforcement (2) relié à l'élément de revêtement (1),
- ainsi qu'une pluralité de surépaisseurs (10),
dans lequel
- l'élément de revêtement (1) est pourvu, dans la zone de la liaison avec l'élément de renforcement (2), d'une pluralité de surépaisseurs (10) espacées les unes des autres dans la direction de l'élément de renforcement (2), lesdites surépaisseurs faisant partie de l'élément de revêtement (1),
- aucun cordon de soudure n'est prévu entre des surépaisseurs (10) adjacentes l'une à l'autre dans les zones (12) ayant une épaisseur moindre de l'élément de revêtement (1), et
- l'élément de renforcement (2) est relié d'un seul tenant avec l'élément de revêtement (1) dans la zone des surépaisseurs (10) et formant ainsi une pluralité de parties de liaison (21) espacées les unes des autres,
**caractérisé en ce que**
- l'élément de renforcement (2) est soudé avec la pluralité de surépaisseurs (10), et
- les surépaisseurs (10) présentent respectivement une forme de losange, l'élément de renforcement (2) étant aligné sur une ligne de liaison de deux coins opposés l'un à l'autre du losange.

2. Composant de structure selon la revendication 1, **caractérisé en ce que** les coins du losange sont arrondis.

3. Composant de structure selon l'une des revendications précédentes, **caractérisé en ce que** l'élément de renforcement (2) est pourvu d'un évidement (22 ; 24) dans la zone de l'intervalle entre deux surépaisseurs (10) adjacentes l'une à l'autre.

4. Composant de structure selon l'une des revendications précédentes, **caractérisé en ce que** le rapport entre la longueur de la partie de liaison (21) et l'intervalle entre deux parties de liaison (21) adjacentes l'une à l'autre est au moins de 3/1.

5. Composant de structure selon l'une des revendications précédentes, **caractérisé en ce qu'**une pluralité d'éléments de renforcement (2) espacés latéralement les uns des autres est prévue.

6. Composant de structure selon l'une des revendications précédentes, **caractérisé en ce qu'**une pluralité de premiers éléments de renforcement (2) est disposée le long d'une première direction et une pluralité de seconds éléments de renforcement (5) est disposée le long d'une seconde direction, la première direction et la seconde direction étant orientées selon un angle l'une par rapport à l'autre, l'angle étant de préférence de 90°.

7. Composant de structure selon l'une des revendications précédentes, **caractérisé en ce que** l'élément de revêtement (1) et l'élément de renforcement (2) ou les éléments de renforcement (2 ; 5) sont constitués de métal, de préférence de métal léger.
